# FASCICULE DE BREVET EUROPEEN

(11) **EP 0 636 398 B1**
(45) Date de publication et mention de la délivrance du brevet: **14.01.1998**
(21) Numéro de dépôt: 94401254.1
(22) Date de dépôt: 07.06.1994
(51) Int. Cl.: B01D 29/11, B01D 29/58, B01D 29/96, B01D 35/157

(54) **Installation de distillation d'eau de vie**
Anlage zur Destillation von Branntwein
Installation for distillation of spirits

(30) Priorité: 26.07.1993 FR 9309163
(43) Date de publication de la demande: 01.02.1995
(73) Titulaire: ETABLISSEMENTS ROBERT PRULHO, 16100 Cognac (FR)
(72) Inventeur: Prulho, Richard, F-16130 Gente (FR)
(74) Mandataire: Rinuy, Santarelli

(56) Documents cités:
- FR-A- 473 870
- US-A- 3 399 776
- US-A- 4 736 766

## Description

L'invention a trait aux installations de distillation d'eau-de-vie.

On sait que pour connaître le taux d'alcool volumique du distillat obtenu, on prévoit généralement dans ces installations un élément dit porte-alcoomètre qui fournit un emplacement pour disposer un densimètre, dit alcoomètre, et pour le guider sans le bloquer afin qu'il puisse s'enfoncer plus ou moins dans le distillat en fonction de la densité de celui-ci, le taux d'alcool étant déterminé d'après la position de l'alcoomètre après correction de température.

En fonction de la règlementation applicable, il est parfois nécessaire d'employer des porte-alcoomètres dits inviolables, qui sont prévus pour qu'on ne puisse pas accéder au distillat qui y circule sans avoir à briser un plomb ou un scellé, de sorte qu'un tel accès serait immanquablement révélé aux autorités concernées.

L'accord de ces dernières est donc nécessaire pour pouvoir accéder au filtre généralement prévu dans l'un des conduits du porte-alcoomètre, de sorte que ce filtre n'est nettoyé que très rarement, et en tout cas bien moins souvent qu'il serait souhaitable pour lui conserver toute son utilité et son efficacité.

L'invention vise à obvier à cet inconvénient.

Elle propose à cet effet une installation de distillation d'eau-de-vie, munie d'un porte-alcoomètre comportant un conduit horizontal d'entrée de distillat, qui débouche dans un conduit vertical descendant dont la base se raccorde à au moins une unité de réception d'un alcoomètre et dont le sommet s'ouvre sur l'atmosphère à travers un évent adapté à empêcher d'accéder dans son intérieur ; caractérisé en ce que :
- ledit évent est porté par un couvercle qu'on peut ouvrir pour accéder à un filtre amovible se trouvant à l'intérieur du conduit descendant ;
- elle est munie, à l'amont dudit conduit d'entrée, d'une vanne adaptée à empêcher, lorsqu'elle est dans une position d'arrêt, que le distillat ne puisse pénétrer dans le porte-alcoomètre ; et
- elle est également munie de moyens de blocage pour bloquer ledit couvercle en position fermée tant que ladite vanne n'est pas en position d'arrêt, et pour bloquer ladite vanne en position d'arrêt tant que le couvercle n'est pas en position fermée.

On ne peut ainsi ouvrir le couvercle que si la vanne est en position d'arrêt, et l'ouverture du couvercle bloque la vanne dans cette position. On ne pourra donc réalimenter le porte-alcoomètre qui si le couvercle a été refermé, et réouvrir ensuite ce dernier qu'après avoir coupé l'alimentation en ramenant la vanne à la position d'arrêt.

On voit donc qu'avec les moyens que propose l'invention, il est impossible d'accéder à l'intérieur du conduit descendant lorsque du distillat y circule.

Par conséquent, malgré la possibilité d'accès au filtre disposé dans un conduit interne de l'installation, on préserve l'impossibilité d'accéder au distillat à l'insu des autorités, à condition bien sûr de poser des plombs ou des scellés qui révèleraient le démontage frauduleux du couvercle, de la vanne ou des moyens de blocage.

Selon des caractéristiques préférées, lesdits moyens de blocage comportent :
- un organe d'assujettissement ;
- des moyens pour lier en mouvement l'organe d'assujettissement et l'obturateur de la vanne ;
- des moyens de montage de l'organe d'assujettissement, adaptés à ne lui permettre de se déplacer que suivant un trajet prédéterminé tout au long duquel il demeure fixé au reste de l'installation, ce trajet admettant une extrémité correspondant à la position d'arrêt de la vanne, et étant coupé au niveau de cette extrémité par le couvercle tant que celui-ci n'est pas en position fermée ; et
- des moyens de montage du couvercle adaptés à ne lui permettre de se déplacer que suivant un trajet prédéterminé tout au long duquel il demeure fixé au reste de l'installation, ce trajet admettant une extrémité correspondant à la position fermée, et étant coupé au niveau de cette extrémité par l'organe d'assujettissement tant que la vanne n'est pas en position d'arrêt.

Ces moyens de blocage sont particulièrement sûrs tandis que leur mise en oeuvre peut se faire de façon simple, commode et économique.

Selon d'autres caractéristiques préférées, pour les mêmes raisons, et qui conviennent d'ailleurs à la mise en oeuvre des caractéristiques qui viennent d'être exposées :
- le couvercle est monté articulé, autour d'un axe de pivotement horizontal, avec une course se terminant vers le bas par la position fermée, et il présente une face supérieure plate, qui est horizontale en position fermée ; et
- il est prévu un organe d'assujettissement, monté articulé autour d'un axe de pivotement vertical, lié en mouvement avec l'obturateur de ladite vanne, et présentant une face inférieure plate horizontale et située à un niveau correspondant à celui de la face supérieure du couvercle quand celui-ci est fermé, le couvercle fermé étant surplombé par au moins une portion de l'organe d'assujettissement dans toutes les positions de la vanne autres que la position d'arrêt, dans laquelle le couvercle se trouve au moins partiellement en travers de l'organe d'assujettissement, juste devant lui, tant qu'il n'est pas fermé.

Selon d'autres caractéristiques préférées, l'organe d'assujettissement est monté articulé par solidarisation à l'obturateur de ladite vanne, qui est tournant autour d'un axe de pivotement vertical.

Avec cette simple solidarisation, on réalise à la fois le montage à rotation de l'organe d'assujettissement et sa liaison en mouvement avec l'obturateur de la vanne.

Selon d'autres caractéristiques préférées pour leur commodité de mise en oeuvre :
- le couvercle est monté articulé grâce à une charnière disposée transversalement au dessus du conduit d'entrée ;
- le couvercle comporte deux bords longitudinaux opposés et un bord transversal dont les extrémités se raccordent chacune à l'extrémité de l'un des bords longitudinaux qui est située côté conduit d'entrée, ladite charnière étant fixée au couvercle par ledit bord transversal ;
- l'organe d'assujettissement comporte une face d'attaque qui, lorsque la vanne est en position d'arrêt et que le couvercle est fermé, côtoie étroitement l'un des bords longitudinaux du couvercle.

Selon d'autres caractéristiques préférées, l'organe d'assujettissement comporte une face en portion de cercle, centrée sur son axe de pivotement, et ayant un diamètre correspondant à la distance entre cet axe et l'extrémité du couvercle opposée audit bord transversal.

La matière située derrière la face en portion en cercle viendra donc surplomber le couvercle à proximité de son extrémité opposée à la charnière, c'est-à-dire aussi loin que possible de cette dernière, et ceci sans dépassement excessif qui pourrait poser des problèmes d'encombrement.

Selon d'autres caractéristiques préférées :
- le couvercle comporte, à l'opposé dudit bord transversal, un bord arrondi dont les extrémités se raccordent chacune à l'extrémité de l'un des bords longitudinaux ; et
- l'organe d'assujettissement a sa face d'ataque qui, lorsque la vanne est en position d'arrêt et que le couvercle est fermé, côtoie également ledit bord arrondi sur une portion prédéterminée, puis se raccorde à ladite face en portion de cercle.

L'organe d'assujettisement peut ainsi se placer au dessus du couvercle à l'opposé de la charnière dès que la vanne quitte la position d'arrêt.

Selon d'autres caractéristiques préférées, un crochet un crochet solidaire du conduit descendant est prévu à l'opposé de ladite charnière avec une patte surplombant juste l'organe d'assujettissement quand la vanne n'est pas en position d'arrêt.

Ce crochet est particulièrement avantageux sur le plan de l'inviolabilité, puisqu'il empêche totalement de faire fléchir l'organe d'assujettissement afin de soulever légèrement le couvercle et d'accéder au distillat.

Selon d'autres caractéristiques préférées pour des raisons de simplicité et de commodité à la mise en oeuvre :
- le couvercle est formé dans une plaque où sont ménagés des trous de ventilation au niveau desquels est rapportée intérieurement de la toile de filtre ; et
- l'organe d'assujettissement est formé dans une plaque et il présente une ouverture centrale pour laisser lesdits trous de ventilation s'ouvrir sur l'atmosphère quand le porte-alcoomètre est alimenté en distillat.

L'exposé de l'invention sera maintenant poursuivi par la description d'exemples de réalisation, donnée ci-après à titre illustratif et non limitatif en référence aux dessins annexés. Sur ceux-ci :
- la figure 1 est une vue en élévation du porte-alcoomètre d'une installation conforme à l'invention, dans une position où le distillat peut y circuler ;
- la figure 2 est la vue de dessus correspondante, la tête de réception de l'alcoomètre étant montrée sans les éléments qui surplombent la bride inférieure de cette tête ;
- la figure 3 est une vue similaire, mais avec les vannes en position d'arrêt ;
- la figure 4 est une vue en élévation de la bride rapportée au sommet du conduit descendant, qui sert au montage du couvercle et à procurer un crochet coopérant avec l'organe d'assujettissement ;
- la figure 5 montre en agrandissement la partie de la bride située à droite sur la figure 4, et la manière dont le couvercle y est monté au moyen d'une charnière ; et
- les figures 6 et 7 sont des vues de même nature que les figures 2 et 3 pour une variante de réalisation.

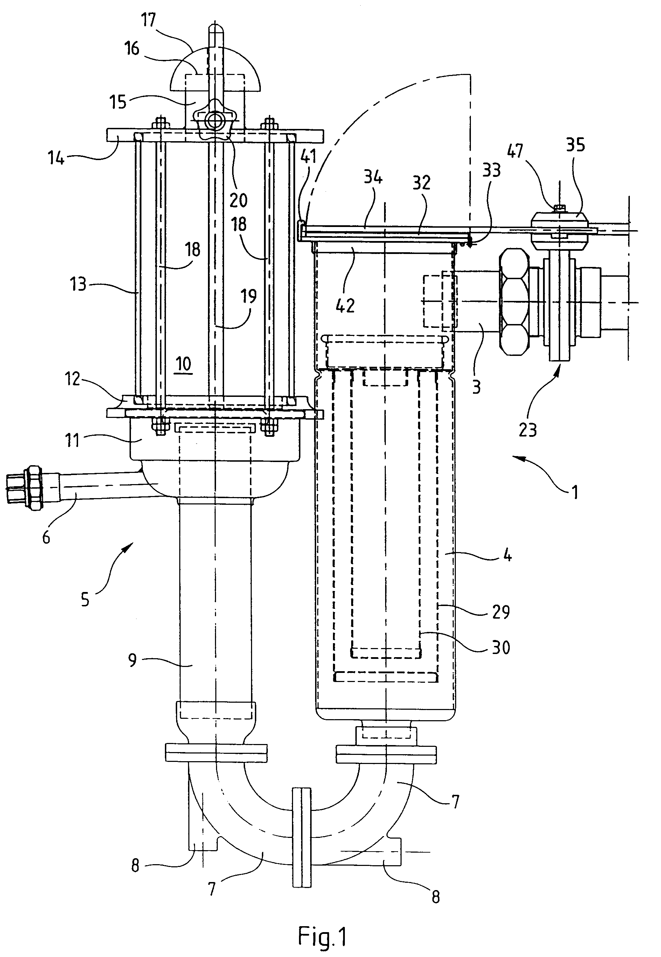

L'installation de distillation montrée partiellement sur les figures 1 à 3 est munie d'un porte-alcoomètre 1 en aval duquel se trouve un ensemble (non représenté) de vannes de sélection permettant de diriger le distillat dans la cuve appropriée en fonction de ses caractéristiques, alors qu'en amont du porte-alcoomètre 1 se trouve un ensemble 2, dit té de lavage, en amont duquel se trouve le condenseur (non représenté) dont sort le distillat.

Le porte alcoomètre 1 comporte un conduit horizontal 3 d'entrée de distillat, qui débouche dans un conduit vertical descendant 4 dont la base se raccorde à une unité 5 de réception d'un alcoomètre, unité dont sort le distillat par un conduit horizontal 6.

Dans l'exemple illustré, les bases de l'unité de réception 5 et du conduit descendant 4 sont raccordées par deux coudes similaires 7 à 45°, qui comportent chacun un mamelon 8 de montage d'un robinet de purge.

L'unité 5 comporte un conduit vertical montant 9 dont le pied forme la base de l'unité 5 alors que son sommet débouche dans une enceinte 10 communiquant avec l'atmosphère, et formé par une coupelle 11 au sommet de laquelle est soudée une bride 12 munie dans sa face supérieure d'une rainure annulaire dans laquelle est engagé un verre tubulaire 13 dont le sommet est à son tour engagé dans la rainure d'une bride supérieure 14 qui comporte en son centre un évent formé par un conduit 15 dont le bout est obturé par une toile de filtre 16 tandis qu'il est coiffé par un chapeau hémisphérique 17, des trous étant prévus dans les brides 12 et 14 pour permettre le passage de quatre tiges 18 munies d'écrou à leurs extrémités pour serrer les brides 12 et 14 l'une vers l'autre.

Le conduit montant 9 débouche dans l'enceinte 10 à un niveau plus bas que celui auquel le conduit d'entrée 3 débouche dans le conduit descendant 4, de sorte que le distillat déborde tout autour du sommet du conduit 9, avec un niveau à peu près constant, puis est recueilli dans la coupelle 11 dont il s'en va par le conduit 6. L'alcoomètre (non représenté) est prévu pour être disposé dans l'enceinte 10 avec sa base qui est introduite dans le conduit 9, un organe de guidage 19, réglable en hauteur grâce à la molette 20, étant également prévu de sorte qu'en fonction de la densité du distillat, l'alcoomètre peut s'enfoncer plus ou moins dans celui-ci sans risque de blocage.

Le té de lavage 2 fait partie d'un ensemble prévu pour pouvoir nettoyer la partie de l'installation située en amont du porte-alcoomètre. Le té 2 comporte trois orifices, celui qui est situé à gauche sur les dessins débouchant dans le conduit d'entrée 3 du porte-alcoomètre 5, l'orifice 21 lui faisant face étant raccordé au conduit de sortie du condenseur, et le troisième orifice 22 à des moyens bien connus prévus pour injecter par cet orifice une solution de lavage, et pour que tout liquide sortant de l'installation par l'orifice 22 soit nécessairement amené jusqu'à l'égoût.

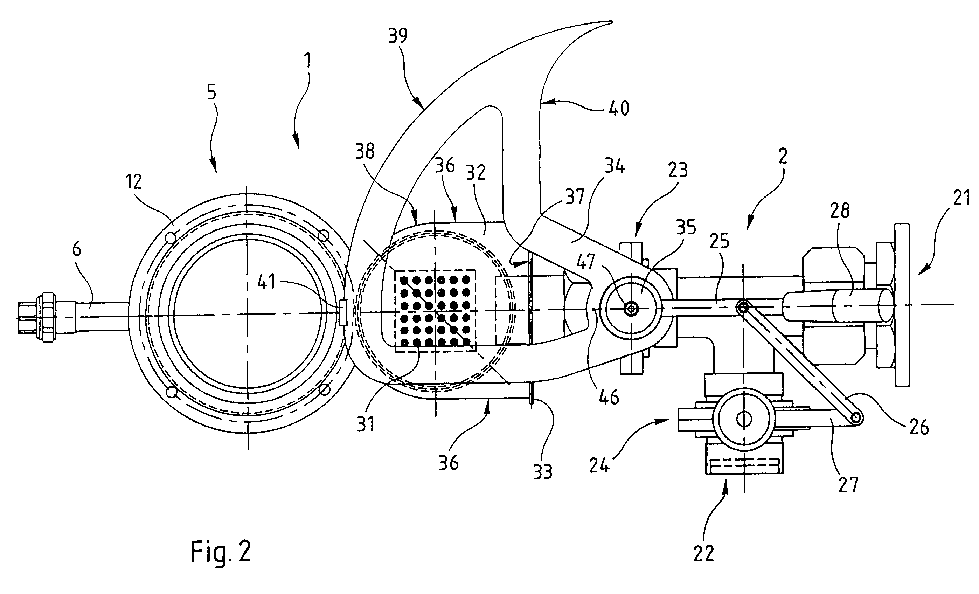

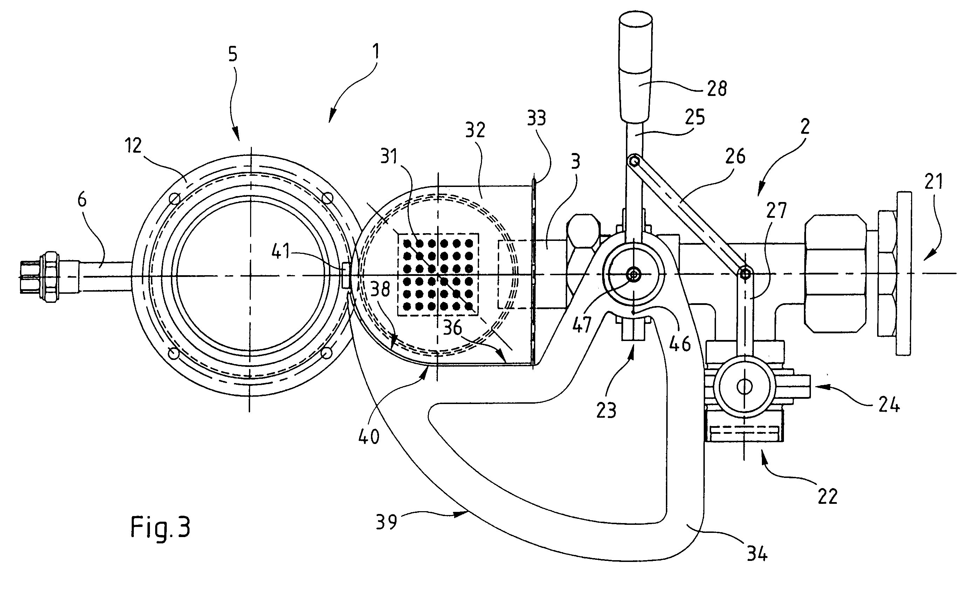

Le té 2 est en outre muni de deux vannes à obturateur tournant autour d'un axe vertical, respectivement une vanne 23 prévue pour obturer l'orifice connecté au conduit 3 du porte-alcoomètre et une vanne 24 pour obturer l'orifice 22, des tringles 25, 26 et 27 étant prévues pour que la vanne 23 soit ouverte quand la vanne 22 est fermée (position des figures 1 et 2), et pour que la vanne 23 soit fermée quand la vanne 22 est ouverte (position de la figure 3), une poignée 28 étant prévue au bout de la tringle 25 pour permettre de manoeuvrer le té.

Un filtre en deux parties est prévu dans le conduit descendant 4, avec une partie externe 29 en métal perforé et une partie interne 30 en toile de filtre.

Le conduit 4, au lieu de s'ouvrir classiquement sur l'atmosphère à travers un évent du même type que celui situé au-desus de l'enceinte 10, se ventile à travers les trous 31 d'un couvercle 32 formé dans une plaque, et sur la face intérieure duquel est rapportée de la toile de filtre au niveau des trous 31.

Le couvercle 32 est monté articulé grâce à une charnière 33 disposée transversalement au dessus du conduit d'entrée 3, il peut donc pivoter autour d'un axe horizontal, sa course se terminant vers le bas lorsqu'il est dans la position fermée montrée sur les figures, dans laquelle il est horizontal.

En ouvrant le couvercle 32 comme montré en trait mixte sur la figure 1, on peut accéder au filtre 29,30 contenu dans le conduit 4, ce qui permet de l'en extraire et de le remettre en place lorsqu'il est nécessaire de le nettoyer.

Afin de ne permettre d'ouvrir le couvercle 32 qu'en l'absence de circulation de distillat dans le porte-alcoomètre 5, on a solidarisé à l'obturateur de la vanne 23 un organe d'assujettissement 34, celui-ci étant plus précisément monté sur la tête de commande 35 de cette vanne.

L'organe 34 est formé dans une plaque et est disposé horizontalement avec sa face inférieure qui est située à un niveau correspondant à celui de la face supérieure du couvercle 32 quand celui-ci est fermé, comme montré sur la figure 1 ; et ainsi qu'on le voit sur les figures 2 et 3, le couvercle 32 est surplombé par au moins une portion de l'organe 34 dans toutes les configurations du té 2 autres que celle montrée sur la figure 3.

C'est donc dans cette configuration que le couvercle pourra être ouvert, et on observera que celui-ci se trouvera au moins partiellement en travers de l'organe 34, juste devant lui, tant qu'il ne sera pas en position fermée.

On ne peut donc ouvrir le couvercle 32 que si les vannes du té 2 empêchent que le distillat ne puisse pénétrer dans le porte-alcoomètre, et on ne pourra réalimenter celui-ci en manoeuvrant ces vannes que si le couvercle 32 a été refermé.

Comme on le voit sur la figure 2, l'organe 34 comporte une ouverture centrale qui permet non seulement d'économiser la matière, mais surtout de laisser les trous de ventilation 31 ouverts sur l'atmosphère quand le porte-alcoomètre 5 est alimenté en distillat.

Le couvercle 32 comporte deux bords longitudinaux opposés 36 qui se raccordent à un bord transversal 37 côté conduit d'entrée 3, alors qu'à l'opposé du bord 37 les bords longitudinaux 36 se racordement chacun à un bord arrondi 38. La charnière 33 est fixée au couvercle 32 par le bord 37, et le bord arrondi 38 est en demi-cercle et concentrique au conduit descendant 4.

L'organe d'assujettissement 34 comporte une face 39 en portion de cercle, centrée sur l'axe de pivotement de l'organe 34, c'est-à-dire celui de l'obturateur de la vanne 23, et ayant un diamètre légèrement plus grand (voir figure 1) que la distance entre cet axe de pivotement et l'extrémité du couvercle 32 qui est opposée au bord 37, c'est-à-dire le point le plus éloigné de la charnière 33. Ce point sera donc surplombé par la portion de l'organe 34 située juste derrière cette face 39, le fait de limiter par celle-ci l'organe 34 étant favorable sur le plan de l'encombrement.

L'organe 34 comporte également une face d'attaque 40 qui, dans la position de la figure 3, côtoie étroitement l'un des bords longitudinaux 36 du couvercle 32 et également le bord arrondi 38 avant de se raccorder à la face 39.

On voit que les faces 39 et 40 se prolongent pratiquement jusqu'au plan de symétrie du porte-alcoomètre, c'est-à-dire jusqu'à être très proche du point du couvercle le plus éloigné de la charnière 33, ce qui fait que l'on ne pourra manoeuvre la poignée 28 que si le couvercle 32 est parfaitement fermé, et le couvercle sera bloqué en position fermée aussitôt qu'on manoeuvrera la poignée 28.

Un crochet 41, solidaire du conduit 4, est en outre prévu à l'opposé de la charnière 33, avec une patte surplombant juste l'organe d'assujettissement 34 quand le té est dans une configuration autre que celle de la figure 3 (voir figure 1), de sorte qu'il n'est pas possible de faire fléchir vers le haut l'organe 34 pour ouvrir légèrement le couvercle 32.

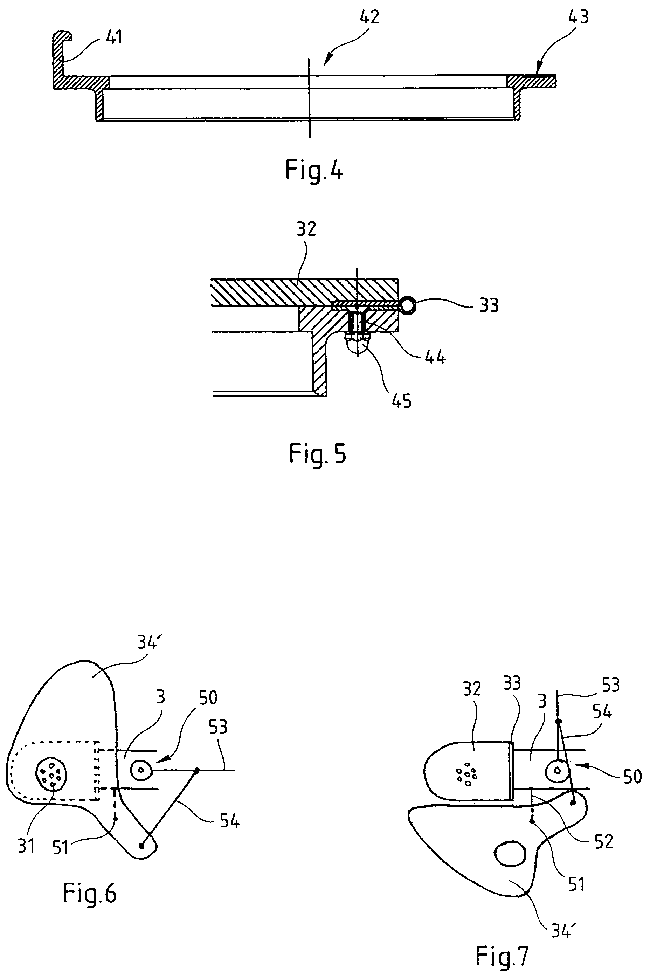

Le crochet 41 fait partie d'une bride 42 rapportée au sommet du conduit 4, et qui sert également au montage du couvercle 32. Comme montré sur les figures 4 et 5, la bride 42 comporte un lamage 43 pour loger la charnière 33, l'une des branches de celle-ci y est fixée grâce à des vis 44 coopérant avec un écrou borgne 45, et l'autre branche de la charnière est soudée à l'étain sur le couvercle, celui-ci étant fait dans une plaque de cuivre tandis que la charnière est en laiton.

Pour rendre inviolable la fixation du couvercle, chacun des écrous 45 est plombé, et la tige centrale de la charnière 33 est plombée à au moins une extrémité afin qu'on ne puisse pas l'enlever en la faisant coulisser suivant l'axe de la charnière.

Pour rendre inviolable le montage de l'organe d'assujettissement 34, un trou 46 y est prévu devant la tête 35, ainsi qu'un autre trou dans la tête de la vis de fixation 47, et un scellé est mis en place dans ces deux trous.

Le reste de l'installation est rendu inviolable de façon classique, par la pose de scellés aux endroits appropriés.

L'installation montrée très schématiquement sur les figures 6 et 7 est similaire à celle qui vient d'être décrite, mais elle ne comporte à l'amont du conduit d'entrée 3 qu'une seule vanne 50, et l'organe d'assujettissement 34' est articulé indépendamment de cette vanne, en un point 51 porté par une tige 52, et des tringles 53 et 54 sont prévues pour lier en mouvement la vanne 50 et l'organe d'assujettissement 34'.

Lorsqu'elle est dans la position d'arrêt montrée sur la figure 7, la vanne 50 empêche que le distillat ne puisse pénétrer dans le porte-alcoomètre, alors que celui-ci est alimenté dans la position de la figure 6.

On notera que chacune des vannes 23 et 24 peut être considérée à elle seule comme une vanne adaptée à empêcher, lorsqu'elle est dans la position d'arrêt montrée sur la figure 3, que le distillat ne puisse pénétrer dans le porte-alcoomètre, mais qu'il est préférable pour des raisons de sécurité de prévoir à la fois une obturation de l'entrée du porte-alcoomètre (vanne 23) et une ouverture vers l'égoût (vanne 24).

On observera que dans l'installation représentée sur les figures 1 à 3, on a prévu que le té 2 puisse avoir son orifice 22 disposé du côté opposé à celui représenté, le volant 34 étant alors monté de cet autre côté, en étant placé dessus-dessous.

## Revendications

1. Installation de distillation d'eau-de-vie, munie d'un porte-alcoomètre (1) comportant un conduit horizontal d'entrée de distillat (3), qui débouche dans un conduit vertical descendant (4) dont la base se raccorde à au moins une unité (5) de réception d'un alcoomètre et dont le sommet s'ouvre sur l'atmosphère à travers un évent adapté à empêcher d'accéder dans son intérieur ; caractérisé en ce que :
- ledit évent (31) est porté par un couvercle (32) qu'on peut ouvrir pour accéder à un filtre (29, 30) amovible se trouvant à l'intérieur du conduit descendant (4) ;
- elle est munie, à l'amont dudit conduit d'entrée (3), d'une vanne (23, 24 ; 50) adaptée à empêcher, lorsqu'elle est dans une position d'arrêt, que le distillat ne puisse pénétrer dans le porte-alcoomètre ; et
- elle est également munie de moyens de blocage (33, 34, 35 ; 33, 34', 51-54) pour bloquer ledit couvercle (32) en position fermée tant que ladite vanne (23, 24 ; 50) n'est pas en position d'arrêt, et pour bloquer ladite vanne en position d'arrêt tant que le couvercle n'est pas en position fermée.

2. Installation selon la revendication 1, caractérisé en ce que lesdits moyens de blocage comportent :
- un organe d'assujettissement (34 ; 34') ;
- des moyens (35 ; 53, 54) pour lier en mouvement l'organe d'assujettissement (34 ; 34') et l'obturateur de la vanne (23, 24 ; 50) ;
- des moyens (35 ; 51, 52) de montage de l'organe d'assujettissement, adaptés à ne lui permettre de se déplacer que suivant un trajet prédéterminé tout au long duquel il demeure fixé au reste de l'installation, ce trajet admettant une extrémité correspondant à la position d'arrêt de la vanne, et étant coupé au niveau de cette extrémité par le couvercle tant que celui-ci n'est pas en position fermée ; et
- des moyens (33) de montage du couvercle (32) adaptés à ne lui permettre de se déplacer que suivant un trajet prédéterminé tout au long duquel il demeure fixé au reste de l'installation, ce trajet admettant une extrémité correspondant à la position fermée, et étant coupé au niveau de cette extrémité par l'organe d'assujettissement tant que la vanne n'est pas en position d'arrêt.

3. Installation selon l'une quelconque des revendications 1 ou 2, caractérisée en ce que :
- le couvercle (32) est monté articulé, autour d'un axe de pivotement horizontal, avec une course se terminant vers le bas par la position fermée, et il présente une face supérieure plate, qui est horizontale en position fermée ; et
- il est prévu un organe d'assujettissement (34 ; 34'), monté articulé autour d'un axe de pivotement vertical, lié en mouvement avec l'obturateur de ladite vanne (23, 24 ; 50), et présentant une face inférieure plate horizontale et située à un niveau correspondant à celui de la face supérieure du couvercle (32) quand celui-ci est fermé, le couvercle fermé étant surplombé par au moins une portion de l'organe d'assujettissement (34 ; 34') dans toutes les positions de la vanne autres que la position d'arrêt, dans laquelle le couvercle se trouve au moins partiellement en travers de l'organe d'assujettissement, juste devant lui, tant qu'il n'est pas fermé.

4. Installation selon la revendication 3, caractérisée en ce que l'organe d'assujettissement (34) est monté articulé par solidarisation à l'obturateur de ladite vanne (23), qui est tournant autour d'un axe de pivotement vertical.

5. Installation selon la revendication 4, caractérisé en ce que le couvercle (32) est monté articulé grâce à une charnière (33) disposée transversalement au dessus du conduit d'entrée (3).

6. Installation selon la revendication 5, caractérisée en ce que :
- le couvercle (32) comporte deux bords longitudinaux opposés (36) et un bord transversal (37) dont les extrémités se raccordent chacune à l'extrémité de l'un des bords longitudinaux (36) qui est située côté conduit d'entrée (3), ladite charnière (33) étant fixée au couvercle par ledit bord transversal (37) ;
- l'organe d'assujettissement (34) comporte une face d'attaque (40) qui, lorsque la vanne est en position d'arrêt et que le couvercle est fermé, côtoie étroitement l'un des bords longitudinaux (36) du couvercle.

7. Installation selon la revendication 6, caractérisée en ce que l'organe d'assujettissement (34) comporte une face en portion de cercle, centrée sur son axe de pivotement, et ayant un diamètre correspondant à la distance entre cet axe et l'extrémité du couvercle opposée audit bord transversal (37).

8. Installation selon la revendication 7, caractérisée en ce que :
- le couvercle (32) comporte, à l'opposé dudit bord transversal (37), un bord arrondi (38) dont les extrémités se raccordent chacune à l'extrémité de l'un des bords longitudinaux (36) ; et
- l'organe d'assujettissement (34) a sa face d'attaque (40) qui, lorsque la vanne est en position d'arrêt et que le couvercle est fermé, côtoie également ledit bord arrondi (38) sur une portion prédéterminée, puis se raccorde à ladite face (39) en portion de cercle.

9. Installation selon la revendication 8, caractérisée en ce qu'un crochet (41) solidaire du conduit descendant (4) est prévu à l'opposé de ladite charnière (33) avec une patte surplombant juste l'organe d'assujettissement (34) quand la vanne n'est pas en position d'arrêt.

10. Installation selon l'une quelconque des revendications 2 à 9, caractérisé en ce que :
- le couvercle (32) est formé dans une plaque où sont ménagés des trous (31) de ventilation au niveau desquels est rapportée intérieurement de la toile de filtre ; et
- l'organe d'assujettissement (34, 34') est formé dans une plaque et il présente une ouverture centrale pour laisser lesdits trous de ventilation s'ouvrir sur l'atmosphère quand le porte-alcoomètre est alimenté en distillat.

## Claims

1. A spirits distillation installation equipped with an alcoholmeter carrier (1) comprising a horizontal distillate entry pipe (3), which opens into a descending vertical pipe (4) the base of which is connected to at least one alcoholmeter reception unit (5) and the top of which is open to the atmosphere through a vent adapted to prevent access to its interior, characterized in that:
- the said vent (31) is carried by a cover (32) which can be opened to gain access to a removable filter (29, 30) located inside the descending pipe (4);
- it is equipped at the upstream end of the said entry pipe (3) with a valve (23, 24; 50) adapted to prevent, when it is in a stop position, the distillate being able to enter the alcoholmeter carrier; and
- it is also equipped with blocking means (33, 34, 35; 33 34', 51-54) for blocking the said cover (32) in a closed position as long as the said valve (23, 24; 50) is not in the stop position and to block the said valve in the stop position when the cover is not in the closed position.

2. An installation according to Claim 1, characterised in that the said blocking means comprise :
- an adjustment element (34, 34');
- means (35; 53, 54) for connecting in movement the adjustment element (34, 34') and the obturator of the valve (23, 24 ; 50);
- means (35; 51, 52) for mounting the adjustment element adapted to allow it to move only along a predetermined path along all of which it remains fixed to the rest of the installation, the said path including one end corresponding to the stop position of the valve and being intersected near this end by the cover when the latter is not in the closed position, and
- means (33) for mounting the cover (32) adapted to allow it to move only along a predetermined path along all of which it remains fixed to the rest of the installation, the said path including one end corresponding to the closed position, and being intersected near this end by the adjustment element when the latter is not in the stop position.

3. An installation according to either one of Claims 1 or 2, characterized in that:
- the cover (32) is mounted articulated around a horizontal pivotment axis, with a path terminated at the bottom by the closed position, and it has a flat upper surface which is horizontal in the closed position; and
- it is provided with an adjustment element (34; 34') mounted articulated around a vertical pivotment axis, connected in movement with the obturator of the said valve (23, 24; 50), and having a flat horizontal lower surface, which is located at a level corresponding to that of the upper face of the cover (32) when the latter is closed, the cover being overlapped by at least a portion of the adjustment element (34; 34') in all positions of the valve other than the stop position, in which the cover is at least partially located at right angles to the adjustment element, just in front of the latter, while it is not closed.

4. An installation according to Claim 3, characterized in that the adjustment element (34) is mounted articulated by fixing it to the obturator of the said valve (23) which rotates around a vertical pivotment axis.

5. An installation according to Claim 4, characterized in that the cover (32) is mounted articulated by means of a hinge (33) disposed transversely above the entry pipe (3).

6. An installation according to Claim 5, characterized in that:
- the cover (32) comprises two opposite longitudinal edges (36) and a transverse edge (37) the ends of which each join the end of one of the longitudinal edges (36) which is situated towards the entry pipe (3), the said hinge (33) being fixed to the cover by the said transverse edge (37);
- the adjustment element (34) comprises a front face (40) which, when the valve is in the stop position and the cover is closed, fits closely against one of the longitudinal edges (36) of the cover.

7. An installation according to Claim 6, characterized in that the adjustment element (34) comprises a face shaped like a portion of a circle, centred on its pivotment axis, and having a diameter corresponding to the distance between the said axis and the end of the cover opposite to the transverse edge (37).

8. An installation according to Claim 7, characterized in that:
- the cover (32) comprises, opposite the said transverse edge (37), a rounded edge (38) the ends of which each join the end of one of the longitudinal edges (36), and
- the adjustment element (34) has a front face (40) which, when the valve is in the stop position and the cover is closed, also fits closely against a predetermined portion of the said rounded edge (38) and then joins the said face (39) which is a portion of a circle.

9. An installation according to Claim 8, characterized in that a hook (41) fixed to the descending pipe (4) is provided opposite the said hinge (33) with a lug just overlapping the adjustment element (34) when the valve is not in the stop position.

10. An installation according to any one of Claims 2 to 9, characterized in that:
- the cover (32) is formed from a plate in which ventilation holes (31) are made in the region corresponding to where a filter cloth is fitted internally, and
- the adjustment element (34, 34') is formed from a plate and it comprises a central aperture to allow the said ventilation holes to be open to the atmosphere when the alcoholmeter carrier is supplied with distillate.

## Patentansprüche

1. Anlage zur Destillation von Branntwein, die mit einem Alkoholmeterhalter (1) ausgestattet ist, welcher eine horizontale Röhre zum Einlaß von Destillat (3) aufweist, die in eine vertikal nach unten verlaufende Röhre (4) einmündet, deren Fuß an mindestens eine Einheit (5) zur Aufnahme eines Alkoholmeters angeschlossen ist und deren Spitze sich über einen Abzug, der dafür ausgelegt ist, den Zugang zu ihrem Inneren zu verhindern, in die Atmosphäre öffnet, dadurch gekennzeichnet, daß:
- der Abzug (31) von einem Deckel (32) getragen wird, den man öffnen kann, um zu einem herausnehmbaren Filter (29, 30) Zugang zu erhalten, der sich im Inneren der nach unten verlaufenden Röhre (4) befindet,
- sie stromaufwärts der Einlaßröhre (3) mit einem Ventil (23, 24 ; 50) versehen ist, das dafür ausgelegt ist, wenn es in einer Verschlußposition ist, zu verhindern, daß das Destillat in den Alkoholmeterhalter hinein vordringen kann, und
- sie außerdem mit Verriegelungsmitteln (33, 34, 35 ; 33, 34', 51-54) ausgestattet ist, um den Deckel (32) in geschlossener Position zu verriegeln, wenn das Ventil (23, 24 ; 50) sich nicht in der Verschlußposition befindet, und um das Ventil in der Verschlußposition zu verriegeln, wenn der Deckel nicht in geschlossener Position ist.

2. Anlage nach Anspruch 1, dadurch gekennzeichnet, daß die Verriegelungsmittel folgendes aufweisen:
- ein Befestigungsorgan (34 ; 34'),
- Mittel (35 ; 53, 54), um das Befestigungsorgan (34 ; 34') und den Verschluß des Ventils (23, 24 ; 50) beweglich zu verbinden,
- Mittel (35 ; 51, 52) zur Montage des Befestigungsorgans, die so ausgelegt sind, daß sie es ermöglichen, daß es nur entlang einem vorgegebenen Pfad fortbewegt wird, auf dessen gesamter Länge es am Rest der Anlage befestigt bleibt, wobei dieser Pfad einen Endpunkt zuläßt, der der Verschlußposition des Ventils entspricht, und auf der Höhe dieses Endpunktes durch den Deckel, wenn jener nicht in geschlossener Position ist, durchtrennt wird, und
- Mittel (33) zur Montage des Deckels (32), die so ausgelegt sind, daß sie es ermöglichen, daß er nur entlang einem vorgegebenen Pfad fortbewegt wird, auf dessen gesamter Länge er am Rest der Anlage befestigt bleibt, wobei dieser Pfad einen Endpunkt zuläßt, der der geschlossenen Position entspricht, und auf der Höhe dieses Endpunktes durch das Befestigungsorgan, wenn das Ventil nicht in der Verschlußposition ist, durchtrennt wird.

3. Anlage nach mindestens einem der Ansprüche 1 und 2, dadurch gekennzeichnet, daß:
- der Deckel (32) um eine horizontale Schwenkachse herum beweglich angebracht ist, mit einem Hub, der unten in der geschlossenen Position endet, und er eine flache Oberseite aufweist, die in der geschlossenen Position horizontal ist, und
- ein Befestigungsorgan (34 ; 34') vorgesehen ist, das um eine vertikale Schwenkachse herum beweglich angebracht ist, beweglich mit dem Verschluß des Ventils (23, 24 ; 50) verbunden ist und eine flache Unterseite aufweist, die horizontal und auf einer Höhe gelegen ist, die derjenigen der Oberseite des Deckels (32) entspricht, wenn jener geschlossen ist, wobei der geschlossene Deckel in allen Positionen des Ventils, die von der Verschlußposition, in der sich der Deckel zumindest teilweise quer zum Befestigungsorgan befindet, gerade vor ihm, wenn er nicht geschlossen ist, von zumindest einem Teil des Befestigungsorgans (34 ; 34') überragt wird.

4. Anlage nach Anspruch 3, dadurch gekennzeichnet, daß das Befestigungsorgan (34) am Verschluß des Ventils (23), der um eine vertikale Schwenkachse drehbeweglich ist, gelenkig befestigt ist.

5. Anlage nach Anspruch 4, dadurch gekennzeichnet, daß der Deckel (32) durch ein Scharnier (33), das transversal auf der Einlaßsröhre (3) angeordnet ist, gelenkig angebracht ist.

6. Anlage nach Anspruch 5, dadurch gekennzeichnet, daß:
- der Deckel (32) zwei gegenüberliegende longitudinale Ränder (36) und einen transversalen Rand (37) aufweist, dessen Enden sich jeweils an das Ende eines der longitudinalen Ränder (36), das zur Seite der Einlaßsröhre (3) hin gelegen ist, anschließen, wobei das Scharnier (33) durch den transversalen Rand (37) am Deckel befestigt ist,
- das Befestigungsorgan (34) eine Angriffsseite (40) aufweist, die, wenn das Ventil in der Verschlußposition ist und der Deckel geschlossen ist, fest in Verbindung mit einem der longitudinalen Ränder (36) des Deckels kommt.

7. Anlage nach Anspruch 6, dadurch gekennzeichnet, daß das Befestigungsorgan (34) eine Kreisabschnittfläche aufweist, die auf seine Schwenkachse zentriert ist und einen Durchmesser aufweist, der dem Abstand zwischen dieser Achse und dem Ende des Deckels, das dem transversalen Rand (37) gegenüberliegt, entspricht.

8. Anlage nach Anspruch 7, dadurch gekennzeichnet, daß:
- der Deckel (32) gegenüber dem transversalen Rand (37) einen abgerundeten Rand (38) aufweist, dessen Enden sich jeweils an das Ende eines der longitudinalen Ränder (36) anschließen, und
- das Befestigungsorgan (34) seine Angriffsseite (40) hat, die, wenn das Ventil in der Verschlußposition ist und wenn der Deckel geschlossen ist, ebenfalls auf einem vorgegebenen Abschnitt mit dem abgerundeten Rand (38) in Verbindung kommt, und sich auch an die Kreisabschnittfläche (39) anschließt.

9. Anlage nach Anspruch 8, dadurch gekennzeichnet, daß ein mit der nach unten verlaufenden Röhre (4) einstückiger Haken (41) gegenüber dem Scharnier (33) vorgesehen ist, wobei eine Klaue gerade das Befestigungsorgan (34) überragt, wenn das Ventil nicht in der Verschlußposition ist.

10. Anlage nach mindestens einem der Ansprüche 2 bis 9, dadurch gekennzeichnet, daß:
- der Deckel (32) aus einer Platte gebildet ist, die mit Ventilationslöchern (31) versehen ist, auf deren Höhe innen das Filternetz eingesetzt ist, und
- das Befestigungsorgan (34 ; 34') aus einer Platte gebildet ist und eine zentrale Öffnung aufweist, um die Ventilationslöcher sich zur Atmosphäre hin öffnen zu lassen, wenn der Alkoholmeterhalter mit dem Destillat gespeist wird.
